# EUROPEAN PATENT SPECIFICATION

(11) **EP 4 239 762 B1**
(45) Date of publication and mention of the grant of the patent: **29.07.2026**
(21) Application number: 22876812.3
(22) Date of filing: 27.09.2022
(51) Int. Cl.: H01M 10/04, H01M 50/105, H01M 50/186, H01M 50/46, H01M 10/052, H01M 10/0585, B29C 65/02, B29C 65/00, B29L 31/34

(54) **POUCH TYPE SECONDARY BATTERY, AND DEVICE AND METHOD FOR SEALING THE SAME**
BEUTELARTIGE SEKUNDÄRBATTERIE SOWIE VORRICHTUNG UND VERFAHREN ZUM ABDICHTEN DAVON
BATTERIE SECONDAIRE DE TYPE POCHE, ET DISPOSITIF ET PROCÉDÉ DE SCELLEMENT DE CELLE-CI

(30) Priority: 28.09.2021 KR 20210128364; 23.09.2022 KR 20220121202
(43) Date of publication of application: 06.09.2023
(73) Proprietor: LG Energy Solution, Ltd., Seoul 07335 (KR)
(72) Inventor: PARK, Ki Beom, Daejeon 34122 (KR)
(74) Representative: Plasseraud IP
(86) International application number: PCT/KR2022/014480
(87) International publication number: WO 2023/055040

(56) References cited:
- JP-A- 2010 135 111
- KR-A- 20090 065 587
- KR-A- 20120 060 707
- KR-A- 20120 102 935
- KR-A- 20130 122 564
- KR-A- 20140 041 057
- KR-A- 20160 100 602
- KR-A- 20210 069 594
- KR-B1- 101 508 416
- US-A1- 2018 342 710

## Description

### CROSS-REFERENCE TO RELATED APPLICATION

The present application claims the benefit of the priority of Korean Patent Application Nos. 10-2021-0128364, filed on September 28, 2021, and 10-2022-0121202, filed on September 23, 2022.

### TECHNICAL FIELD

The present disclosure relates to a pouch type secondary battery, and a device and method for sealing the pouch type secondary battery, and more particularly, to a sealing device and a sealing method, which improve adhesion between an electrode and a separator provided in a secondary battery so as to prevent an overvoltage or rapid consumption of an electrolyte that may occur according to a bonded state of the electrode and the separator, and a pouch type secondary battery to which the sealing device and the sealing method are applied.

### BACKGROUND ART

Recently, as fossil fuels get exhausted gradually, the interest of alternative energy that can replace the fossil fuels increases in that amounts of the fuels are limited and the importance of environmental pollution prevention increases. Accordingly, research and development for power generation technologies based on energy sources such as solar heat, water power, wind power, ocean energy, and biomass energy, which have little impact on the environmental pollution, are actively carried out.

In particular, research on secondary batteries that can be repeatedly charged are actively carried out, and development is carried out continuously on various aspects such as the materials, efficiency, and structures of the secondary batteries.

In the structural aspects, the secondary batteries are mainly classified into a cylindrical type battery, a prismatic type battery, or a pouch type battery. Accordingly, research and development are carried out to improve energy efficiency and energy density or prevent energy inefficiency according to the structural feature corresponding to each of various types of secondary batteries.

In the aspects of energy efficiency and density, the pouch type battery is more advantageous than other types of batteries, but continuous improvement is attempted in the aspects such as arrangement, combination, or sealing of components, so as to secure higher efficiency.

KR 2016-0100602 A, KR 101508416 B1, US 2018/342710 A1, KR 2021-0069594 A, and JP 2010-135111 A relate to secondary battery.

### DISCLOSURE OF THE INVENTION

### TECHNICAL PROBLEM

The pouch type battery has a shape in which an electrode assembly is accommodated in a pouch type case, and the electrode assembly in which an electrode and a separator are alternately stacked is accommodated in the case so that high energy density may be secured. However, in order to maintain the high energy density, the electrode and the separator need to be well bonded to each other, and in order to secure high adhesion, high precision is required during a manufacture process of a secondary battery.

During the manufacture process of the secondary battery, however, when sealing is performed only on an exterior material portion of the pouch type case, there are problems that ends of the electrode and the separator may be poorly bonded to each other to cause an overvoltage or accelerate consumption of an electrolyte. In addition, when an additional sealing process is carried out to bond the ends of the electrode and the separator to each other, a longer manufacture time may be taken or a separate sealing tool may be required, which may lead to inefficiency of the manufacture process.

An object of the present invention devised to solve the problems as above is to provide a secondary battery having high adhesion density by sealing a plurality of regions of a pouch type case without additional manufacture process.

### TECHNICAL SOLUTION

The present invention is defined by the appended set of claims. According to one aspect, a secondary battery according to the present invention is defined in claim 1.

The first sealing area may be a region corresponding to a bonding region at the edge of the pouch, and the second sealing area may be a region corresponding to bonding regions at an end of the electrode and an end of the separator.

Adhesion between an end of the electrode and an end of the separator, which correspond to the electrode assembly, may be greater than adhesion between a portion other than the end of the electrode and a portion other than the end of the separator.

Adhesion of the second sealing area may correspond to adhesion of the first sealing area.

The first sealing area and the second sealing area may be regions bonded and sealed by heat and pressure.

An area of the second sealing area may be greater than an area of the first sealing area.

The second sealing area may include a region overlapping the electrode assembly when viewed from an upper side.

According to another aspect, a device for sealing a secondary battery according to the present invention is defined in claim 8.

In the sealing tool, the first upper block and the second upper block may be provided as an integrated shape.

According to yet another aspect, a method for sealing a secondary battery according to the present invention is defined in claim 10.

The sealing process may further include a sealing process performed so that adhesion between an end of the electrode and an end of the separator, which correspond to the electrode assembly, is greater than adhesion between a portion other than the end of the electrode and a portion other than the end of the separator.

The sealing process may further include a sealing process performed so that adhesion of the second sealing area corresponds to adhesion of the first sealing area.

The sealing process further includes sealing the first sealing area and the second sealing area at the same time by using the sealing tool.

### ADVANTAGEOUS EFFECTS

The pouch type secondary battery according to the present invention and the device and method for sealing the pouch type secondary battery may provide the secondary battery having the high adhesion density by sealing the plurality of regions of the pouch type case without the additional manufacture process.

The pouch type secondary battery according to the present invention, and the device and method for sealing the pouch type secondary battery may improve the adhesion not only to the exterior material of the pouch type case but also to the end of the electrode and the end of the separator of the electrode assembly, so that the occurrence of the overvoltage or the acceleration of the electrolyte consumption may be prevented.

### BRIEF DESCRIPTION OF THE DRAWINGS

FIG. 1 is a perspective view illustrating a battery cell of a pouch type secondary battery according to an embodiment of the present invention.
FIG. 2 is an exploded perspective view illustrating the battery cell of the pouch type secondary battery according to an embodiment of the present invention.
FIG. 3 is a flowchart illustrating a process of manufacturing a battery cell of a pouch type secondary battery according to an embodiment of the present invention.
FIG. 4 is a perspective view illustrating a process of sealing a battery cell of a pouch type secondary battery according to an embodiment of the present invention.
FIG. 5 is a cross-sectional view illustrating a process of sealing a battery cell of a pouch type secondary battery according to an embodiment of the present invention.
FIG. 6 is a top view illustrating a plurality of sealing areas of a battery cell of a pouch type secondary battery according to an embodiment of the present invention.

### MODE FOR CARRYING OUT THE INVENTION

Hereinafter, preferred embodiments of the present invention will be described in detail with reference to the accompanying drawings so as to enable those skilled in the art to which the present invention pertains to easily carry out the present invention. The present invention may, however, be embodied in different forms and should not be construed as limited by the embodiments set forth herein.

The parts unrelated to the description, or the detailed descriptions of related well-known art that may unnecessarily obscure subject matters of the present invention, will be ruled out in order to clearly describe the present invention. In the drawings, like reference numerals refer to like elements throughout the whole specification.

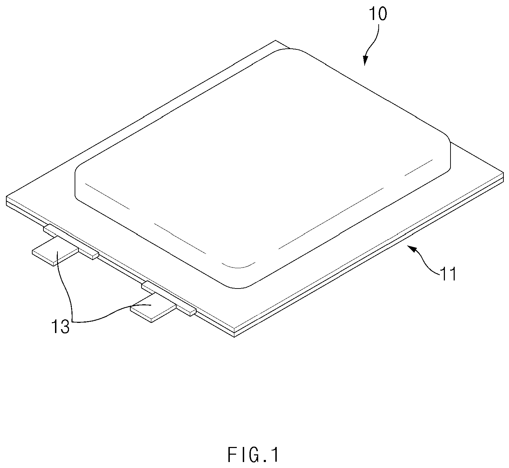

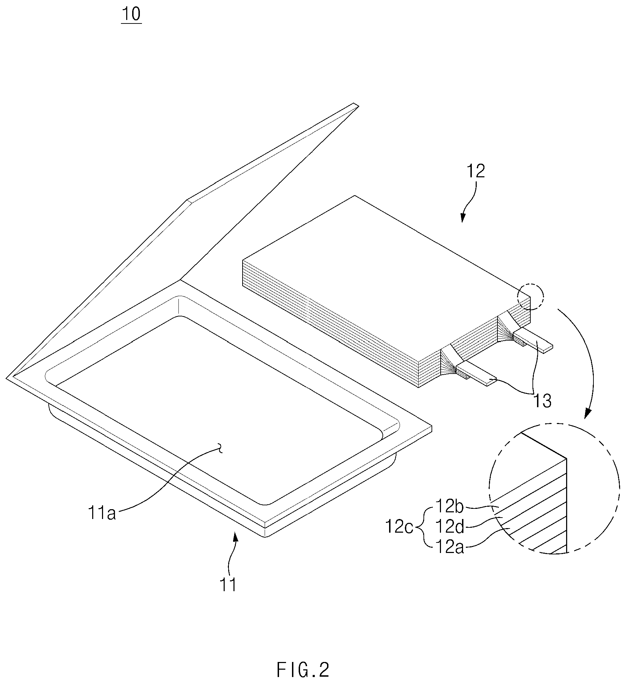

FIG. 1 is a perspective view of a battery cell of a pouch type secondary battery according to an embodiment of the present invention. FIG. 2 is an exploded perspective view of the battery cell of the pouch type secondary battery according to an embodiment of the present invention.

Hereinafter, the configuration of a battery cell 10 of the pouch type secondary battery will be described with reference to FIGS. 1 and 2.

The battery cell 10 may include an electrode assembly 12, and a pouch 11 in which an accommodation part 11a capable of accommodating an electrolyte and the electrode assembly 12 is disposed.

The pouch 11 may have a part to be attached (or bonded) to form a sealing part. The sealing part may include a plurality of sealing areas.

The electrode assembly 12 may be a chargeable and dischargeable device and have a structure in which an electrode 12c and a separator 12d are gathered to be alternately stacked.

The electrode 12c may include a positive electrode 12a and a negative electrode 12b. The electrode assembly 12 may have a structure in which the positive electrode 12a, the separator 12d, and the negative electrode 12b are gathered to be alternately stacked.

The positive electrode 12a may include a positive electrode collector and a positive electrode active material applied to the positive electrode collector, and the negative electrode 12b may include a negative electrode collector and a negative electrode active material applied to the negative electrode collector.

The positive electrode collector may be made of, for example, a foil made of an aluminum (Al) material.

The positive electrode active material may include a lithium manganese oxide, a lithium cobalt oxide, a lithium nickel oxide, a lithium iron phosphate, or a compound or mixture including at least one thereof.

The positive electrode active material may include, for another example, a Hi Ni-based positive electrode material. The Hi Ni-based positive electrode material may include one or more of a LiNiMnCoO-based material, a LiNiCoAl-based material, and a LiMiMnCoAl-based material. Here, the content of nickel (Ni) may be, for example, 0.5 mol to 0.95 mol.

The negative electrode collector may be made of, for example, a foil made of a copper (Cu) or nickel (Ni) material.

In one example, the negative electrode active material may include a material including synthetic graphite. In another example, the negative electrode active material may include a lithium metal, a lithium alloy, carbon, petroleum coke, activated carbon, graphite, a silicon compound, a tin compound, a titanium compound, or an alloy thereof.

The separator 12d is made of an insulation material and thus, electrically insulates the positive electrode 12a and the negative electrode 12b from each other. The separator 12d may be made of, for example, a microporous polyolefin-based resin film such as polyethylene or polypropylene.

The battery cell 10 may include an electrode lead 13 electrically connected to the electrode 12c of the electrode assembly 12.

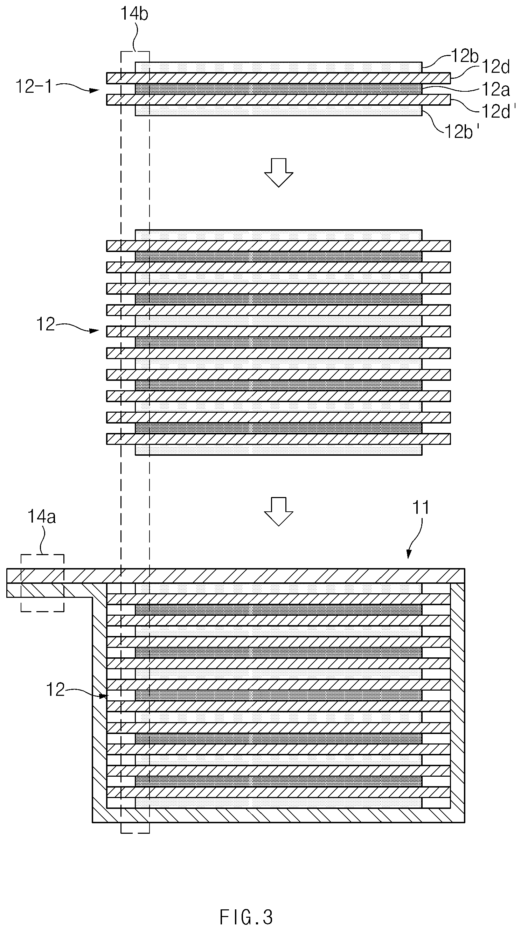

FIG. 3 illustrates a process of manufacturing a battery cell of a pouch type secondary battery according to an embodiment of the present invention.

An electrode assembly unit 12-1 may have a structure in which a negative electrode 12b, a separator 12d, a positive electrode 12a, a separator 12d', and a negative electrode 12b' are alternately stacked. Alternatively, the electrode assembly unit 12-1 may have a structure in which a positive electrode, a separator, a negative electrode, a separator, and a positive electrode are alternately stacked.

An electrode assembly 12 may have a structure in which the electrode assembly unit 12-1 is repeatedly stacked. For example, a plurality of electrode assembly units 12-1 may be stacked to form the electrode assembly 12.

The electrode assembly 12 may be accommodated in an accommodation part 11a of a pouch 11. In the accommodation part 11a, an electrolyte may be accommodated in a remaining space except for a space in which the electrode assembly 12 is accommodated.

The pouch 11 has an edge at which a first sealing area 14a is disposed. The first sealing area 14a is disposed in a region spaced a predetermined distance from the electrode assembly 12. An exterior material of the pouch 11 may be bonded to itself in the first sealing area 14a so as to maintain a state in which a battery cell 10 is sealed (or airtight). The bonding (or sealing) of the exterior material of the pouch 11 in the first sealing area 14a may be carried out through a method such as thermal fusion by heat and pressure.

A second sealing area 14b is a region corresponding to the electrode assembly 12. The second sealing area 14b is a region corresponding to an edge of the electrode assembly 12. The second sealing area 14b may be a region corresponding to an end of the electrode 12c and an end of the separator 12d. In other words, the second sealing area 14b may include a region overlapping the electrode assembly 12 when the battery cell 10 is viewed from an upper side.

The end of the electrode 12c and the end of the separator 12d may be bonded (sealed) to each other in the second sealing area 14b. The bonding (or sealing) of the end of the electrode 12c to the end of the separator 12d may be carried out through a method such as thermal fusion by heat and pressure.

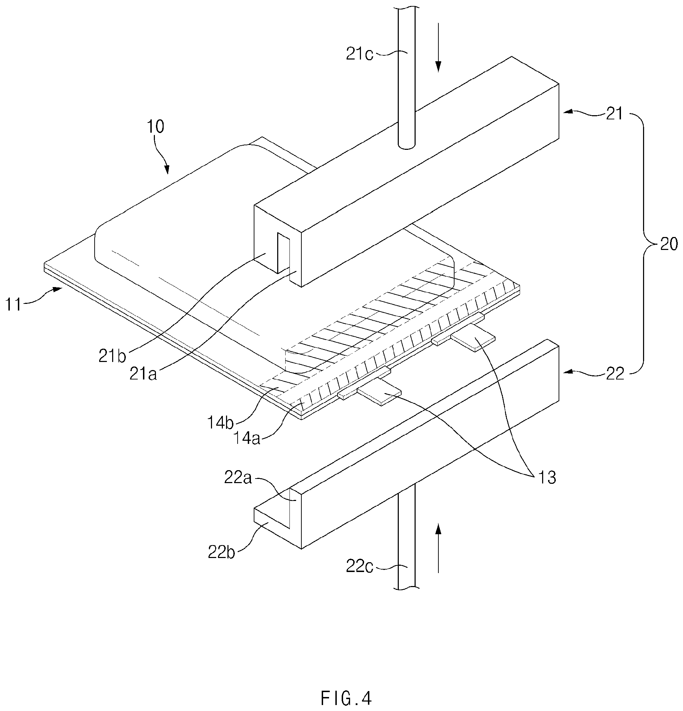

FIG. 4 illustrates a process of sealing a battery cell of a pouch type secondary battery according to an embodiment of the present invention.

A sealing device includes a jig on which a sealing target is disposed, and a sealing tool 20 that seals the sealing target.

The sealing tool 20 seals a portion of each of the pouch 11 and the electrode assembly 12 of the battery cell 10 by heat and pressure. For example, the sealing tool 20 may press the portion of the pouch 11 in a heated state. In this case, the portion of the electrode assembly 12 may also be pressed.

The battery cell 10 may be sealed through the sealing tool 20 of the sealing device.

A sealing part 14 of the battery cell 10 includes the first sealing area 14a disposed at the edge of the pouch 11, and the second sealing area 14b disposed in the region corresponding to the edge of the electrode assembly 12 accommodated in the pouch 11.

The first sealing area 14a and the second sealing area 14b of the sealing part 14 of the battery cell 10 may be sealed through the sealing tool 20.

The sealing device may include a jig on which the battery cell 10 may be disposed. Alternatively, the sealing device may include a jig on which the pouch 11 in which the electrode assembly 12 is accommodated may be disposed.

The sealing tool 20 includes an upper sealing tool 21 and a lower sealing tool 22. Each of the upper sealing tool 21 and the lower sealing tool 22 may be included in the sealing tool 20 as a separate component, or the upper sealing tool 21 and the lower sealing tool 22 may be integrally formed to be included in the sealing tool 20.

The upper sealing tool 21 includes a first upper block 21a and a second upper block 21b. Each of the first upper block 21a and the second upper block 21b may be included in the upper sealing tool 21 as a separate component, or the first upper block 21a and the second upper block 21b may be integrally formed to be included in the upper sealing tool 21.

The lower sealing tool 22 includes a first lower block 22a and a second lower block 22b. Each of the first lower block 22a and the second lower block 22b may be included in the lower sealing tool 22 as a separate component, or the first lower block 22a and the lower upper block 22b may be integrally formed to be included in the lower sealing tool 22.

The sealing tool 20 may include an upper elevation means 21c and a lower elevation means 22c. The upper sealing tool 21 may ascend/descend through the upper elevation means 21c, and the lower sealing tool 22 may ascend/descend through the lower elevation means 22c.

The first upper block 21a and the first lower block 22a are disposed in regions corresponding to each other. The second upper block 21b and the second lower block 22b are disposed in regions corresponding to each other.

The first upper block 21a and the first lower block 22a perform sealing of the first sealing area 14a disposed at the edge of the pouch 11. The second upper block 21b and the second lower block 22b perform sealing of the second sealing area 14b that is a region corresponding to the electrode assembly 12 (or the edge of the electrode assembly 12). The second upper block 21b and the second lower block 22b carry out the sealing of the second sealing area 14b while pressing a portion of the electrode assembly 12.

The second sealing area 14b may include a region overlapping the electrode assembly 12 when viewed from an upper side. The second sealing area 14b has an area value that is 7% to 14% of an area value of the pouch 11 when viewed from an upper side. When the sealing is performed so that the second sealing area 14b has the area ratio relative to the area of the pouch 11 as described above, the adhesion to be described later may be improved to effectively prevent an occurrence of an overvoltage or acceleration of electrolyte consumption.

The sealing of the first sealing area 14a and the second sealing area 14b is performed at the same time by the sealing tool 20, and the adhesion not only to the edge of the pouch 11 but also between the ends of the electrode 12c and the separator 12d may be improved. Accordingly, the occurrence of the overvoltage in the electrode assembly 12 or the acceleration of the consumption of the electrolyte in the pouch 11 may be prevented.

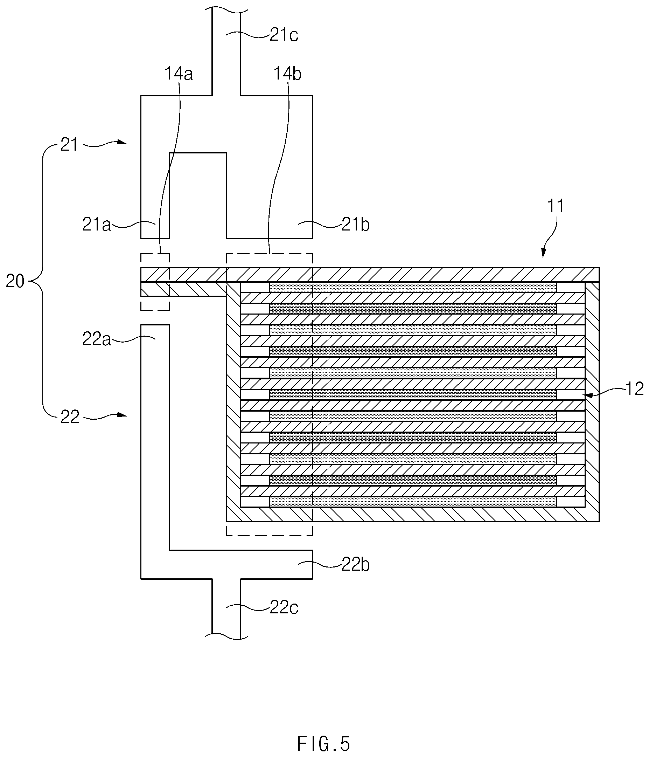

FIG. 5 illustrates a process of sealing a battery cell of a pouch type secondary battery according to an embodiment of the present invention.

The battery cell 10 including the pouch 11 in which the electrode assembly 12 is accommodated may be disposed on the jig of the sealing device so as to be sealed.

The first sealing area 14a disposed on the edge of the pouch 11 is compressed (or bonded) by heat and pressure through the first upper block 21a and the first lower block 22a so as be sealed.

The second sealing area 14b that is an area corresponding to the edge of the electrode assembly 12 in the pouch 11 is compressed (or bonded) by heat and pressure through the second upper block 21b and the second lower block 22b so as be sealed.

The sealing is performed by heat and pressure through the sealing tool so that the adhesion between the end of the electrode 12c and the end of the separator 12d, which correspond to the edge of the electrode assembly 12, may be greater than adhesion between a portion other than the end of the electrode 12c and a portion other than the end of the separator 12d.

The first sealing area 14a and the second sealing area 14b are compressed (or bonded) at the same time by heat and pressure through the sealing tool 20 so as to be sealed.

The sealing may be performed by heat and pressure through the sealing tool 20 so that the adhesion of the second sealing area 14b may correspond to the adhesion of the first sealing area 14a.

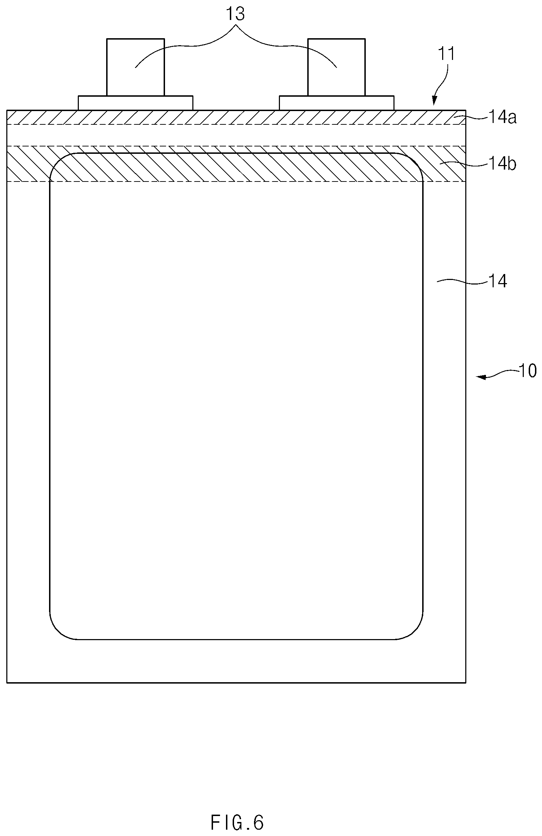

FIG. 6 illustrates a plurality of sealing areas of a battery cell of a pouch type secondary battery according to an embodiment of the present invention. FIG. 6 illustrates a configuration of a battery cell 10 when viewed from an upper side.

The battery cell 10 may include an electrode assembly 12, a pouch 11 in which the electrode assembly 12 is accommodated, and an electrode lead 13 electrically connected to the electrode assembly 12.

A first sealing area 14a is disposed on an area corresponding to an edge of the pouch 11. The first sealing area 14a may be disposed at the edge of the pouch 11, which corresponds to a direction in which an electrode lead 13 that electrically connects the electrode assembly 12 to the outside is disposed.

A second sealing area 14b is disposed on an area corresponding to an edge of the electrode assembly 12. The second sealing area 14b may be disposed on an area corresponding to the edge of the electrode assembly 12, which corresponds to a direction in which the electrode lead 13 is disposed.

The second sealing area 14b may have a shape corresponding to the shape of an edge at one side of the electrode assembly 12.

The second sealing area 14b includes an area corresponding to the edge of the electrode assembly 12 and a portion of an exterior material area of the pouch 11. In other words, the second sealing area 14b may include an area overlapping the electrode assembly 12 when viewed from an upper side. The second sealing area 14b has an area value that is 7% to 14% of an area value of the pouch 11 when viewed from an upper side.

The area of the second sealing area 14b may be greater than the area of the first sealing area 14a.

The adhesion of the second sealing area 14b may correspond to the adhesion of the first sealing area 14a.

The sealing is performed on a plurality of areas (e.g., the first sealing area 14a and the second sealing area 14b) so that the adhesion of the edge of the pouch 11 of the battery cell 10 may be improved, and also the adhesion between the end of the electrode 12c and the end of the separator 12d of the electrode assembly 12 may be improved.

## Claims

1. A secondary battery comprising:
an electrode assembly (12) in which electrodes (12a,12b) and a separator (12d) are alternately stacked; and
a pouch (11) in which the electrode assembly (12) is accommodated and of which a portion comprises a sealing part (14) that is a bonded portion,
wherein the sealing part (14) comprises
a first sealing area (14a) spaced at a predetermined distance from the electrode assembly (12) and disposed at an edge of the pouch (11), which corresponds to a direction in which an electrode lead (13) that electrically connects the electrode assembly (12) to the outside is disposed and
a second sealing area (14b) that is an area corresponding to the electrode assembly (12),
the second sealing area (14b) is an area corresponding to an edge of the electrode assembly (12), wherein the edge of the electrode assembly (12) corresponds to an end of each of the electrodes (12a,12b) and an end of the separator (12d), wherein the second sealing area (14b) has an area value that is 7% to 14% of an area value of the pouch (11) when viewed from an upper side.

2. The secondary battery of claim 1, wherein the first sealing area (14a) is an area corresponding to a bonding area at the edge of the pouch (11), and
the second sealing area (14b) is an area corresponding to bonding areas at an end of the electrode and an end of the separator (12d).

3. The secondary battery of claim 1, wherein adhesion between an end of the electrode and an end of the separator (12d), which correspond to the electrode assembly (12), is greater than adhesion between a portion other than the end of the electrode and a portion other than the end of the separator (12d).

4. The secondary battery of claim 1, wherein adhesion of the second sealing area (14b) corresponds to adhesion of the first sealing area (14a).

5. The secondary battery of claim 1, wherein the first sealing area (14a) and the second sealing area (14b) are areas bonded and sealed by heat and pressure.

6. The secondary battery of claim **1,** wherein an area of the second sealing area (14b) is greater than an area of the first sealing area (14a).

7. The secondary battery of claim 1, wherein the second sealing area (14b) comprises an area overlapping the electrode assembly (12) when viewed from an upper side.

8. A device for sealing a secondary battery, the device comprising:
a jig on which a pouch (11) in which an electrode assembly (12) is accommodated is disposed; and
a sealing tool (20) configured to seal a first sealing area (14a) disposed at an edge of the pouch (11), which corresponds to a direction in which an electrode lead (13) that electrically connects the electrode assembly (12) to the outside is disposed, and a second sealing area (14b) disposed on an area corresponding to an edge of the electrode assembly (12) of the pouch (11), wherein the edge of the electrode assembly (12) corresponds to an end of an electrode (12a,12b) and an end of a separator (12d),
wherein the sealing tool (20) comprises:
an upper sealing tool (21) comprising a first upper block (21a) and a second upper block (21b);
a lower sealing tool (22) comprising a first lower block (22a) and a second lower block (22b),
wherein the first upper block (21a) and the first lower block (22a) are disposed in regions corresponding to each other, and the second upper block (21b) and the second lower block (22b) are disposed in regions corresponding to each other,
wherein the first upper block (21a) and the first lower block (22a) are configured to perform the sealing of the first sealing area (14a), and the second upper block (21b) and the second lower block (22b) are configured to perform the sealing of the second sealing area (14b) while pressing a portion of the electrode assembly (12), such that the sealing tool (20) is configured to perform the sealing of the first sealing area (14a) and the second sealing area (14b) at the same time by heat and pressure.

9. The device of claim 8, wherein, in the sealing tool (20), the first upper block (21a) and the second upper block (21b) are provided as an integrated shape.

10. A method for sealing a secondary battery, the method comprising:
a disposing process of disposing, on a jig, the secondary battery including a pouch (11) in which an electrode assembly (12) is accommodated; and
a sealing process of sealing a first sealing area (14a) disposed at an edge of the pouch (11) disposed on the jig, the edge of the pouch (11) corresponds to a direction in which an electrode lead (13) that electrically connects the electrode assembly (12) to the outside is disposed, and a second sealing area (14b) corresponding to an edge of the electrode assembly (12) of the pouch (11) by using a sealing tool, wherein the edge of the electrode assembly (12) corresponds to an end of an electrode (12a,12b) and an end of a separator (12d), wherein the sealing of the first sealing area (14a) and the second sealing area (14b) is performed at the same time.

11. The method of claim 10, wherein the sealing process further comprises a sealing process performed by heat and pressure through the sealing tool so that adhesion between an end of an electrode and an end of a separator (12d), which correspond to the edge of the electrode assembly (12), is greater than adhesion between a portion other than the end of the electrode and a portion other than the end of the separator (12d).

## Patentansprüche

1. Sekundärbatterie, umfassend:
eine Elektrodenanordnung (12), in der Elektroden (12a, 12b) und ein Separator (12d) abwechselnd gestapelt sind; und
einen Beutel (11), in dem die Elektrodenanordnung (12) untergebracht ist und von dem ein Abschnitt einen Dichtungsteil (14) umfasst, der ein verbundener Abschnitt ist,
wobei der Dichtungsteil (14)
einen ersten Dichtungsbereich (14a), der in einem vorbestimmten Abstand von der Elektrodenanordnung (12) beabstandet und an einem Rand des Beutels (11) angeordnet ist, was einer Richtung entspricht, in der eine Elektrodenableitung (13), die die Elektrodenanordnung (12) elektrisch mit der Außenseiteverbindet, angeordnet ist,
und
einen zweiten Dichtungsbereich (14b) umfasst, der ein der Elektrodenanordnung (12) entsprechender Bereich ist,
der zweite Dichtungsbereich (14b) ein einem Rand der Elektrodenanordnung (12) entsprechender Bereich ist, wobei der Rand der Elektrodenanordnung (12) einem Ende jeder der Elektroden (12a, 12b) und einem Ende des Separators (12d) entspricht, wobei der zweite Dichtungsbereich (14b) einen Flächenwert aufweist, der 7 % bis 14 % eines Flächenwerts des Beutels (11) beträgt, von einer Oberseite aus gesehen.

2. Sekundärbatterie nach Anspruch 1, wobei der erste Dichtungsbereich (14a) ein Bereich ist, der einem Verbindungsbereich am Rand des Beutels (11) entspricht, und der zweite Dichtungsbereich (14b) ein Bereich ist, der Verbindungsbereichen an einem Ende der Elektrode und einem Ende des Separators (12d) entspricht.

3. Sekundärbatterie nach Anspruch 1, wobei die Haftung zwischen einem Ende der Elektrode und einem Ende des Separators (12d), die der Elektrodenanordnung (12) entsprechen, größer ist als die Haftung zwischen einem anderen Abschnitt als dem Ende der Elektrode und einem anderen Abschnitt als dem Ende des Separators (12d).

4. Sekundärbatterie nach Anspruch 1, wobei die Haftung des zweiten Dichtungsbereichs (14b) der Haftung des ersten Dichtungsbereichs (14a) entspricht.

5. Sekundärbatterie nach Anspruch 1, wobei der erste Dichtungsbereich (14a) und der zweite Dichtungsbereich (14b) Bereiche sind, die durch Wärme und Druck verbunden und abgedichtet sind.

6. Sekundärbatterie nach Anspruch 1, wobei eine Fläche des zweiten Dichtungsbereichs (14b) größer ist als eine Fläche des ersten Dichtungsbereichs (14a).

7. Sekundärbatterie nach Anspruch 1, wobei der zweite Dichtungsbereich (14b) einen Bereich umfasst, der die Elektrodenanordnung (12) überlappt, von einer Oberseite aus gesehen.

8. Vorrichtung zum Abdichten einer Sekundärbatterie, die Vorrichtung umfassend:
eine Haltevorrichtung, auf der ein Beutel (11) angeordnet ist, in der eine Elektrodenanordnung (12) untergebracht ist; und
ein Dichtungswerkzeug (20), das konfiguriert ist, um einen ersten Dichtungsbereich (14a), der an einem Rand des Beutels (11) angeordnet ist, was einer Richtung entspricht, in der eine Elektrodenableitung (13), die die Elektrodenanordnung (12) elektrisch mit der Außenseite verbindet, angeordnet ist, und einen zweiten Dichtungsbereich (14b) abzudichten, der auf einem Bereich angeordnet ist, der einem Rand der Elektrodenanordnung (12) des Beutels (11) entspricht, wobei der Rand der Elektrodenanordnung (12) einem Ende jeder der Elektroden (12a, 12b) und einem Ende des Separators (12d) entspricht,
wobei das Dichtungswerkzeug (20) umfasst:
ein oberes Dichtungswerkzeug (21), das einen ersten oberen Block (21a) und einen zweiten oberen Block (21b) umfasst;
ein unteres Dichtungswerkzeug (22), das einen ersten unteren Block (22a) und einen zweiten unteren Block (22b) umfasst,
wobei der erste obere Block (21a) und der erste untere Block (22a) in einander entsprechenden Regionen angeordnet sind, und der zweite obere Block (21b) und der zweite untere Block (22b) in einander entsprechenden Regionen angeordnet sind,
wobei der erste obere Block (21a) und der erste untere Block (22a) konfiguriert sind, um das Abdichten des ersten Dichtungsbereichs (14a) durchzuführen, und der zweite obere Block (21b) und der zweite untere Block (22b) konfiguriert sind, um das Abdichten des zweiten Dichtungsbereichs (14b) durchzuführen, während ein Abschnitt der Elektrodenanordnung (12) gepresst wird, so dass das Dichtungswerkzeug (20) konfiguriert ist, um das Abdichten des ersten Dichtungsbereichs (14a) und des zweiten Dichtungsbereichs (14b) gleichzeitig durch Wärme und Druck durchzuführen.

9. Vorrichtung nach Anspruch 8, wobei in dem Dichtungswerkzeug (20) der erste obere Block (21a) und der zweite obere Block (21b) in einer einstückigen Form bereitgestellt sind.

10. Verfahren zum Abdichten einer Sekundärbatterie, das Verfahren umfassend:
einen Anordnungsprozess des Anordnens der Sekundärbatterie, die einen Beutel (11) beinhaltet, in der eine Elektrodenanordnung (12) untergebracht ist, auf einer Haltevorrichtung; und
einen Abdichtungsprozess des Abdichtens eines ersten Dichtungsbereichs (14a), der an einem Rand des auf der Haltevorrichtung angeordneten Beutels (11) angeordnet ist, wobei der Rand des Beutels (11) einer Richtung entspricht, in der eine Elektrodenableitung (13), die die Elektrodenanordnung (12) elektrisch mit der Außenseite verbindet, angeordnet ist, und eines zweiten Dichtungsbereichs (14b), der einem Rand der Elektrodenanordnung (12) des Beutels (11) entspricht, unter Verwendung eines Dichtungswerkzeugs, wobei der Rand der Elektrodenanordnung (12) einem Ende jeder der Elektroden (12a, 12b) und einem Ende des Separators (12d) entspricht, wobei das Abdichten des ersten Dichtungsbereichs (14a) und des zweiten Dichtungsbereichs (14b) gleichzeitig durchgeführt wird.

11. Verfahren nach Anspruch 10, wobei der Abdichtungsprozess ferner einen Abdichtungsprozess umfasst, der durch Wärme und Druck durch das Dichtungswerkzeug durchgeführt wird, so dass die Haftung zwischen einem Ende einer Elektrode und einem Ende eines Separators (12d), die dem Rand der Elektrodenanordnung (12) entsprechen, größer ist als die Haftung zwischen einem anderen Abschnitt als dem Ende der Elektrode und einem anderen Abschnitt als dem Ende des Separators (12d).

## Revendications

1. Une batterie secondaire comprenant :
un assemblage d'électrodes (12) dans lequel des électrodes (12a, 12b) et un séparateur (12d) sont empilés en alternance ; et
une poche (11) dans laquelle l'assemblage d'électrodes (12) est logé et dont une partie comprend une partie de scellement (14) qui est une partie liée,
dans laquelle la partie de scellement (14) comprend
une première zone de scellement (14a) espacée d'une distance prédéterminée de l'assemblage d'électrodes (12) et disposée au niveau d'un bord de la poche (11), qui correspond à une direction dans laquelle une languette d'électrode (13) qui connecte électriquement l'assemblage d'électrodes (12) à l'extérieur est disposée
et
une seconde zone de scellement (14b) qui est une zone correspondant à l'assemblage d'électrodes (12),
la seconde zone de scellement (14b) est une zone correspondant à un bord de l'assemblage d'électrodes (12), dans laquelle le bord de l'assemblage d'électrodes (12) correspond à une extrémité de chacune des électrodes (12a, 12b) et à une extrémité du séparateur (12d), dans laquelle la seconde zone de scellement (14b) a une valeur de surface qui est de 7 % à 14 % d'une valeur de surface de la poche (11) vue du dessus.

2. La batterie secondaire selon la revendication 1, dans laquelle la première zone de scellement (14a) est une zone correspondant à une zone de liaison au niveau du bord de la poche (11), et
la seconde zone de scellement (14b) est une zone correspondant à des zones de liaison au niveau d'une extrémité de l'électrode et d'une extrémité du séparateur (12d).

3. La batterie secondaire selon la revendication 1, dans laquelle l'adhérence entre une extrémité de l'électrode et une extrémité du séparateur (12d), qui correspondent à l'assemblage d'électrodes (12), est supérieure à l'adhérence entre une partie autre que l'extrémité de l'électrode et une partie autre que l'extrémité du séparateur (12d).

4. La batterie secondaire selon la revendication 1, dans laquelle l'adhérence de la seconde zone de scellement (14b) correspond à l'adhérence de la première zone de scellement (14a).

5. La batterie secondaire selon la revendication 1, dans laquelle la première zone de scellement (14a) et la seconde zone de scellement (14b) sont des zones liées et scellées par chaleur et pression.

6. La batterie secondaire selon la revendication 1, dans laquelle une surface de la seconde zone de scellement (14b) est supérieure à une surface de la première zone de scellement (14a).

7. La batterie secondaire selon la revendication 1, dans laquelle la seconde zone de scellement (14b) comprend une zone chevauchant l'assemblage d'électrodes (12) vue du dessus.

8. Un dispositif de scellement d'une batterie secondaire, le dispositif comprenant :
un gabarit sur lequel une poche (11) dans laquelle un assemblage d'électrodes (12) est logé est disposé ; et
un outil de scellement (20) configuré pour sceller une première zone de scellement (14a) disposée au niveau d'un bord de la poche (11), qui correspond à une direction dans laquelle une languette d'électrode (13) qui connecte électriquement l'assemblage d'électrodes (12) à l'extérieur est disposée, et une seconde zone de scellement (14b) disposée sur une zone correspondant à un bord de l'assemblage d'électrodes (12) de la poche (11), dans lequel le bord de l'assemblage d'électrodes (12) correspond à une extrémité d'une électrode (12a, 12b) et à une extrémité d'un séparateur (12d),
dans lequel l'outil de scellement (20) comprend :
un outil de scellement supérieur (21) comprenant un premier bloc supérieur (21a) et un second bloc supérieur (21b) ;
un outil de scellement inférieur (22) comprenant un premier bloc inférieur (22a) et un second bloc inférieur (22b),
dans lequel le premier bloc supérieur (21a) et le premier bloc inférieur (22a) sont disposés dans des régions se correspondant l'une à l'autre, et le second bloc supérieur (21b) et le second bloc inférieur (22b) sont disposés dans des régions se correspondant l'une à l'autre,
dans lequel le premier bloc supérieur (21a) et le premier bloc inférieur (22a) sont configurés pour effectuer le scellement de la première zone de scellement (14a), et le second bloc supérieur (21b) et le second bloc inférieur (22b) sont configurés pour effectuer le scellement de la seconde zone de scellement (14b) tout en pressant une partie de l'assemblage d'électrodes (12), de telle sorte que l'outil de scellement (20) est configuré pour effectuer le scellement de la première zone de scellement (14a) et de la seconde zone de scellement (14b) en même temps par chaleur et pression.

9. Le dispositif selon la revendication 8, dans lequel, dans l'outil de scellement (20), le premier bloc supérieur (21a) et le second bloc supérieur (21b) sont sous une forme intégrée.

10. Un procédé de scellement d'une batterie secondaire, le procédé comprenant :
un processus de placement consistant à placer, sur un gabarit, la batterie secondaire incluant une poche (11) dans laquelle un assemblage d'électrodes (12) est logé ; et
un processus de scellement consistant à sceller une première zone de scellement (14a) disposée au niveau d'un bord de la poche (11) disposée sur le gabarit, le bord de la poche (11) correspondant à une direction dans laquelle une languette d'électrode (13) qui connecte électriquement l'assemblage d'électrodes (12) à l'extérieur est disposée, et une seconde zone de scellement (14b) correspondant à un bord de l'assemblage d'électrodes (12) de la poche (11) en utilisant un outil de scellement, dans lequel le bord de l'assemblage d'électrodes (12) correspond à une extrémité d'une électrode (12a, 12b) et à une extrémité d'un séparateur (12d), dans lequel le scellement de la première zone de scellement (14a) et de la seconde zone de scellement (14b) est effectué en même temps.

11. Le procédé selon la revendication 10, dans lequel le processus de scellement comprend en outre un processus de scellement effectué par chaleur et pression par l'outil de scellement de sorte que l'adhérence entre une extrémité d'une électrode et une extrémité d'un séparateur (12d), qui correspondent au bord de l'assemblage d'électrodes (12), est supérieure à l'adhérence entre une partie autre que l'extrémité de l'électrode et une partie autre que l'extrémité du séparateur (12d).
